# EUROPEAN PATENT APPLICATION

(11) **EP 4 202 232 A1**
(43) Date of publication of application: **28.06.2023**
(21) Application number: 21216633.4
(22) Date of filing: 21.12.2021
(51) Int. Cl.: F15B 11/17, F15B 11/042, E02F 9/22

(54) **HYDRAULIC SYSTEM**

(71) Applicant: Danfoss Scotland Limited, Edinburgh EH3 9DQ (GB)
(72) Inventor: DOLE, Alexis, Lonhead, Midlothian, EH20 9 TB (GB); STEIN, Uwe, Bernhard, Pascal, Lonhead, Midlothian, EH20 9 TB (GB)
(74) Representative: Keltie LLP

(57) **Abstract**

A hydraulic system (10), the system (10) comprising: multiple pump modules (12); multiple hydraulic consumers (22); and a valve arrangement (28, 128, 228) comprising one or more allocation valves (32). The, or each, allocation valve (32) has four ports (34, 36) that are respectively fluidly connected to a respective pair of the pump modules (12) and to two of the hydraulic consumers (22). The, or each, allocation valve (32) is operable to connect each of its respective connected pump modules (12) to a respective one of the connected hydraulic consumers (22), or to connect both of its respective connected pump modules (12) to either one of the connected hydraulic consumers (22).

## Description

### Field of the Invention

The invention relates to hydraulic systems and to valve arrangements including valve assemblies for such systems. The invention relates particularly to hydraulic systems incorporating, and valve arrangements and valve assemblies configured for use with, electronically commutated hydraulic machines.

### Background to the Invention

Hydraulic systems often use multiple hydraulic pumps, each driving a respective hydraulic consumer circuit that includes a group of hydraulic consumers such as actuators or hydraulic accumulators. For example, in an excavator it is known for a single prime mover to drive a pair of hydraulic pumps in tandem, each of which in turn drives a respective hydraulic circuit. Each circuit includes actuators that are operable to effect the various actions that the excavator must perform, and a set of valves directs hydraulic fluid output by each of the pumps to different actuators at different times, according to the present activity of the excavator.

Recognising that excavators and similar machines seldom require peak pressure or flow to multiple actuators simultaneously, such systems may be configured to deliver hydraulic fluid from both pumps to a single actuator temporarily, while the other actuators are idle or operating at a lower level. Combining the pump outputs in this way enables the system to deliver a higher flow rate to a single actuator than either of the pumps is individually capable of producing, and so reduces the maximum capacity required of each individual pump were it not able to be combined with another pump.

The ability to allocate, and optionally combine, the respective outputs from each pump according to instantaneous demands enhances the flexibility of the system and reduces hardware requirements, as each pump can serve different loads at different times. However, when the pump outputs are combined to meet a peak pressure demand in one of the actuators, the pressure in the resulting combined output may be too high for other actuators that need to operate at the same time. Fluid flowing to these lower pressure actuators must therefore be throttled, thus wasting energy.

An improved approach is disclosed in the Applicant's earlier application, WO 2021/044148, which describes an electronically commutated hydraulic machine (ECM), which may be an electronically commutated pump, also referred to as a 'digital displacement pump', that provides several independently-controllable pump modules that each provides a respective independently variable displacement, similar to a number of individual pumps. In this respect, the ECM has several piston cylinder units (PCUs), each PCU comprising a working chamber and a piston arranged to reciprocate to pressurise fluid in the working chamber. The pistons of the PCUs are driven by a common shaft, and the fluid displaced by the PCUs is grouped, or 'ganged', via interconnecting fluid passages and an endplate to create a set of high pressure ports of the ECM. Each group of PCUs ganged in this way defines a respective pump module, and each port of the endplate defines a port of a respective pump module, which fluid port is also referred to as a 'service' of the ECM. Each service corresponds to the combined displacement of its group of PCUs and therefore has a capacity corresponding to the combined capacity of the PCUs associated with the corresponding pump module. The number of PCUs fluidly connected to each pump module may vary.

The services of the ECM are selectively ganged by an apportioning block. The apportioning block contains a set of valves that are operable to connect each service to one of two manifold lines that feed respective 'valve blocks', or 'block portions', of a main control valve, each valve block being associated with a respective hydraulic circuit that supplies fluid to a subset of actuators of an excavator. Accordingly, the apportioning block is capable of allocating each service to either one of the valve blocks and the associated hydraulic circuit so that, in principle, all services can be allocated to the same valve block, or the services can be divided between the valve blocks in any combination, according to the present demands of the excavator or other machine in which the system is implemented.

The arrangement shown in WO 2021/044148 can therefore meet demands for peak pressure in one circuit while supplying a lower pressure to the other circuit, whilst avoiding throttling the flow, through appropriate allocation of the services. Accordingly, through a combination of the high number of services provided by the ECM(s) and the flexibility of the valve arrangement to allocate those services, the system can operate more efficiently than known excavator systems that may only combine the entire pumping output of the (typically) two main pumps, to meet a demand that is higher than either individual pump can provide.

However, the apportioning block used in the system of WO 2021/044148 includes a switching valve and two check valves for each service, as well as pressure relief valves. Each valve in a hydraulic system adds cost and complexity, and so there is a general desire to reduce the number of separate valves and corresponding valve cavities in a given system where possible. Another factor that must always be considered in hydraulic valve arrangements is that losses through leakage and pressure drops must be minimised as far as possible, to preserve system efficiency.

It is against this background that the present invention has been devised.

### Summary of the Invention

An aspect of the invention provides a hydraulic system. The system comprises: multiple pump modules; multiple hydraulic consumers; and a valve arrangement comprising one or more allocation valves. The, or each, allocation valve has four ports that are respectively fluidly connected to a respective pair of the pump modules and to two of the hydraulic consumers. The, or each, allocation valve is operable to connect each of its respective connected pump modules to a respective one of the connected hydraulic consumers, or to connect both of its respective connected pump modules to either one of the connected hydraulic consumers.

The hydraulic consumers are separate from each other, in that they are not located on the same hydraulic circuit. Each consumer may form part of a respective circuit. The valve arrangement therefore enables the fluid flowing to or from outputs of the pump modules to be allocated dynamically between the consumers, and in particular the allocation valve is configured to gang two pump modules, when required, by connecting both pump modules to the same consumer simultaneously. This enables the system resources to be allocated in a dynamic manner to respond to changing demands, with a minimal number of individual valves.

The, or each, allocation valve may be embodied as a spool valve that comprises: a first pump port that is fluidly connected to a first pump module of the respective pair of pump modules; a second pump port that is fluidly connected to a second pump module of the respective pair of pump modules; a first consumer port that is fluidly connected to a hydraulic consumer of the system; a second consumer port that is fluidly connected to another hydraulic consumer of the system; a valve chamber; and a spool configured for translating movement along a valve axis within the valve chamber between multiple operating positions, to control fluid flow through the valve chamber between the ports.

The operating positions between which the spool moves may comprise: a first operating position, in which the first pump port, the second pump port and the first consumer port are fluidly connected to each other and fluidly isolated from the second consumer port; a second operating position, in which the first pump port, the second pump port and the second consumer port are fluidly connected to each other and fluidly isolated from the first consumer port; and a third operating position, in which the first pump port is fluidly connected to the first consumer port, the second pump port is fluidly connected to the second consumer port, and the first pump port is fluidly isolated from the second pump port. It follows that the first and second consumer ports are also mutually isolated when the spool is in the third operating position.

The valve arrangement may comprise multiple allocation valves that are each fluidly connected to a respective pair of pump modules of the system and to two of the hydraulic consumers of the system. If the system has only two hydraulic consumers then all allocation valves are connected to the same two consumers. If the system has more than two consumers, each allocation valve is connected to two of the consumers, but not necessarily the same two consumers as the other allocation valve(s). It follows that two or more of the allocation valves may be connected to the same two hydraulic consumers, and that at least one of the allocation valves may be connected to a hydraulic consumer that another allocation valve is not connected to. Such arrangements enable the valve arrangement to allocate pump modules between three or more consumers in a flexible manner.

The system may comprise at least one manifold through which multiple allocation valves connect to a respective hydraulic consumer, in which case the valve arrangement may comprise a respective output connected to the, or each, manifold. Two of the allocation valves may be configured to operate in unison in response to a common signal.

The valve arrangement may be embodied as a valve block. For example, the valve block may include multiple allocation valves as well as any accompanying check valves or pressure relief valves of the valve arrangement. If the valve arrangement comprises two or more allocation valves, the valve block may include at least two shared galleries with which respective ports of a number of allocation valves are in fluid communication, in use. Such galleries can therefore act as manifolds to the extent that they combine the fluid flows into or out of the outputs of multiple allocation valves.

The system may be configured to operate in a motoring mode in which fluid flows from at least one of the hydraulic consumers to at least one of the pump modules, through the valve arrangement. The motoring mode may be useful for regeneration operations, for example, in which one or more of the pump modules are driven by pressurised fluid flowing from one or more of the consumers, received into an outlet, to recover energy. Operating in a motoring mode means hydraulic fluid flows into an 'output'.

The valve arrangement may comprise a respective check valve disposed on each line between at least one of the one or more allocation valves and the respective connected hydraulic consumers. Check valves may be required if the allocation valve is arranged for open transitions as the spool moves between operating positions, for example. At least one of the one or more allocation valves may comprise at least one integrated check valve.

As noted above, at least one of the one or more allocation valves may be configured to have open transitions as the spool transitions between operating positions. Conversely, at least one of the one or more allocation valves may be configured to have closed transitions as the spool transitions between operating positions, in which case pressure relief valves may be provided between the allocation valve and the respective connected pump modules.

Each pump module may be defined by a group of one or more piston cylinder units of an electronically commutated pump, in which, for each group, the outputs of the piston cylinder units of the group are combined to form an output of the respective pump module. Each pump module may comprise a different number of piston cylinder units, and the number of piston cylinder units may increase by a fixed number from one group to the next.

At least two of the pump modules may have differing pumping capacities.

The system may comprise one or more hydraulic circuits that each includes a respective one or more of the hydraulic consumers. Each allocation valve may therefore be connected to one or two hydraulic circuits.

The system may comprise a pilot valve that is operable to actuate movement of a spool of at least one of the one or more allocation valves. The system may comprise an electronically commutated pump or a pilot charge pump that supplies fluid to the pilot valve.

At least one of the one or more allocation valves may be configured for electromechanical actuation, for example using a solenoid.

Another aspect of the invention provides a control system configured to operate the hydraulic system of the above aspect. The control system may be configured to operate the or each allocation valve dynamically in response to signals indicative of pressure demand and/or flow rate demand in the hydraulic system.

The control system may be configured to operate each pump module to reduce or cease providing flow entirely during movement of a spool of the allocation valve to which the pump module is connected. This variation in pump module operation may be performed for the entire movement of the spool, or just a part, for example just a portion of movement. For example, in a closed transition allocation valve, the portion of movement may extend from when flow via an inlet port or pump port begins to be, or is completely, restricted or blocked by the spool acting to occlude the flow path to when flow via the inlet port or pump port begins to be, or is completely, open or unrestricted by the spool acting to open the flow path.

The control system may be configured to detect the position and/or movement of the spool so that movement of the spool, and the direction of movement, can be detected, so that the pump module can be operated accordingly. Detection of the position and/or movement of the spool can be achieved in various ways, including through the use of position sensors or pressure sensors, including light-based, contact-based, or inductive sensors, for example. Back-EMF feedback from movement of the spool and/or an inductive signature of a solenoid that actuates movement of the spool can also be measured as indicative of the spool position. It is also possible to detect a valve transition by monitoring pressure in the pump modules, noting that this will be influenced by back pressure generated by a valve transition. Movement of the spool may be detected indirectly, for example with reference to a control command that initiates a transition of an allocation valve. The time taken for the spool to commence movement in response to such a command may be taken into account, for example using a look-up table.

The invention also embraces the combination of the hydraulic system and the control system of the above aspects.

Further aspects of the invention provide methods of controlling a hydraulic system, for example the hydraulic system of the above aspect. The system comprises: multiple pump modules; multiple hydraulic consumers; and a valve arrangement comprising one or more allocation valves. The, or each, allocation valve has four ports that are respectively fluidly connected to a respective pair of the pump modules and to two of the hydraulic consumers.

One method comprises operating the, or each, allocation valve to connect each of its respective connected pump modules to a respective one of the connected hydraulic consumers, or to connect both of its respective connected pump modules to either one of the connected hydraulic consumers.

Another method, which can optionally be combined with the above method, comprises operating each pump module to reduce pumping, and optionally to cease pumping entirely, during movement of a spool of the allocation valve to which the pump module is connected. The method may further comprise detecting the position and/or movement of the spool and operating the pump module in accordance with the detected spool position and/or movement.

Another aspect of the invention provides an allocation valve for a hydraulic system. The allocation valve has four ports that are respectively fluidly connectable to a respective pair of the pump modules and to two hydraulic consumers. When so connected, the allocation valve is operable to connect each of its respective connected pump modules to a respective one of the connected hydraulic consumers, or to connect both of its respective connected pump modules to either one of the connected hydraulic consumers.

The allocation valve may be embodied as a spool valve that comprises a housing enclosing a valve chamber, and a spool disposed within the valve chamber. The housing comprises: a first pump port for connecting to a first pump module; a second pump port for connecting to a second pump module; a first consumer port for connecting to a first consumer; and a second consumer port for connecting to a second consumer. The spool is configured for translating movement along a valve axis between multiple operating positions, to control fluid flow through the valve chamber between the ports.

The spool may be movable to a first operating position, in which the first pump port, the second pump port and the first consumer port are fluidly connected to each other and fluidly isolated from the second consumer port. The spool may be movable to a second operating position, in which the first pump port, the second pump port and the second consumer port are fluidly connected to each other and fluidly isolated from the first consumer port. The spool may be movable to a third operating position, in which the first pump port is fluidly connected to the first consumer port, the second pump port is fluidly connected to the second consumer port, and the first pump port is fluidly isolated from the second consumer port.

The first and second pump ports may be disposed between the first and second consumer ports.

The first consumer port may be connected to the valve chamber by a first set of one or more output passages. The second consumer port may be connected to the valve chamber by a second set of one or more output passages. The first pump port may be connected to the valve chamber by a first set of one or more input passages. The second pump port may be connected to the valve chamber by a second set of one or more input passages.

The spool may comprise a land that is sized to fit between the first and second sets of input passages when the spool is in the third operating position. The land may locate between the second set of input passages and the second set of output passages when the spool is in the first operating position. The land may locate between the first set of input passages and the first set of output passages when the spool is in the second operating position. A width of the land may be less than a width of the passages of the first and second sets of input passages. The first set of output passages and/or the second set of output passages may be inclined at an acute angle with respect to the valve axis. The first set of input passages may converge in a first annular recess that extends radially into a wall of the valve chamber, and the second set of input passages may converge in a second annular recess that extends radially into a wall of the valve chamber.

The allocation valve may be arranged for open transitions as the spool moves between operating positions. The allocation valve may comprise an integrated check valve arranged to open and close the first output port. The check valve may comprise: a valve seat arranged on the exterior of the housing at the first output port, the valve seat being inclined relative to the valve axis; and a check valve member arranged to move parallel to the valve axis to engage with and disengage from the valve seat to open and close the first output port. The check valve member is biased into engagement with the valve seat. The check valve member may extend around the housing. The allocation valve may have a similar integrated check valve arranged to open and close the second output port.

The valve axis may correspond to a central axis of the valve chamber.

The allocation valve may comprise an electronic actuator such as a solenoid to drive movement of the spool.

The allocation valve may comprise a first pilot chamber connectable to a first pilot line at a first end of the valve chamber, in which case movement of the spool is controlled by fluid pressure in the first pilot chamber. The allocation valve may comprise a second pilot chamber connectable to a second pilot line at a second end of the valve chamber, in which case movement of the spool is controlled by fluid pressure in the first and second pilot chambers.

The first input port and/or the second input port and/or the first output port and/or the second output port may be defined by a respective group of openings in the housing.

It will be appreciated that preferred and/or optional features of each aspect of the invention may be incorporated alone or in appropriate combination in the other aspects of the invention also.

### Brief Description of the Drawings

In order that the invention may be more readily understood, preferred non-limiting embodiments thereof will now be described, by way of example only, with reference to the accompanying drawings, in which like features are assigned like reference numerals, and in which:
Figure 1 is a schematic diagram of a hydraulic system according to an embodiment of the invention;
Figure 2 shows a perspective view of an allocation valve according to an embodiment of the invention in axial cross-section;
Figure 3 corresponds to Figure 2 but shows a variant of the allocation valve;
Figure 4 shows a detail view of a check valve member of the allocation valve of Figure 2;
Figure 5 shows a side view of an allocation valve according to another embodiment of the invention;
Figure 6 shows a check valve member for the allocation valve of Figure 5;
Figure 7 shows an alternative valve arrangement for use in the system of Figure 1, in which a pair of allocation valves are configured for hydraulic actuation;
Figure 8 shows another valve arrangement for the system of Figure 1 configured for hydraulic actuation;
Figure 9 shows schematically a valve arrangement for a hydraulic system according to another embodiment of the invention; and
Figure 10 shows schematically a configuration of pump modules of an ECM for use in a hydraulic system of an embodiment of the invention.

### Detailed Description of Embodiments of the Invention

In general terms, embodiments of the invention provide valve arrangements that are configured to allocate a group of hydraulic pump modules dynamically between two or more hydraulic consumer circuits of hydraulic systems, and systems including such valve arrangements. Relative to existing systems, the valve arrangements reduce the number of individual valves, or valve cavities in a valve block, that are required to direct or allocate flow to or from actuators and other hydraulic consumers in order to meet system demands, which allocation of flow changes with time.

Such pump modules may be defined by pump modules of an ECM, for example, where each pump module comprises a group of PCUs whose ports are combined to form a port of the ECM that defines a 'service', as described above. The ECM and its pump modules and corresponding services may be as described in WO 2021/044148, for example, in which case the valve arrangement may provide functionality similar to that of the apportioning block described in WO 2021/044148. Alternatively, other types of pump module may be used in embodiments of the invention.

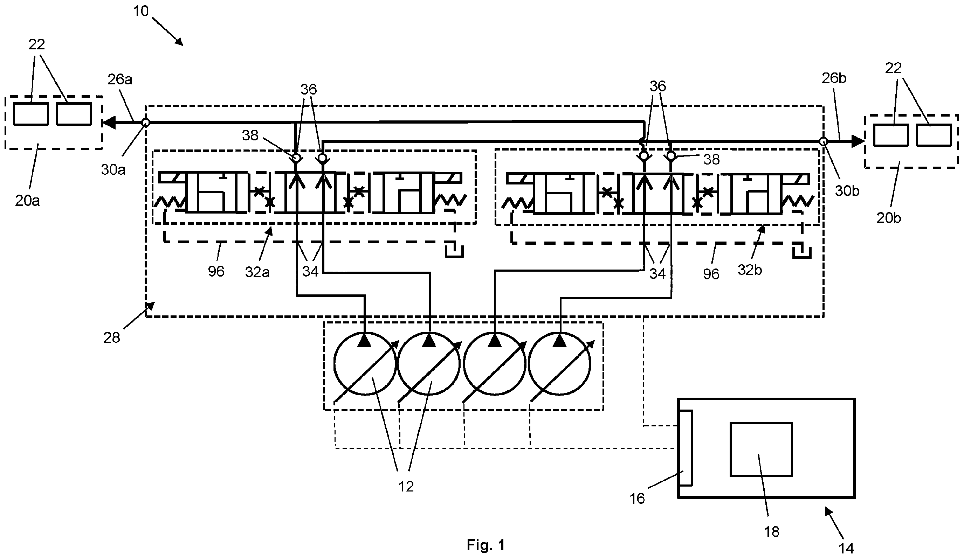

Figure 1 shows a portion of a hydraulic system 10 according to an embodiment of the invention. The system 10 shown in Figure 1 is configured for use in an excavator, although hydraulic systems according to the invention may be configured for use in a range of machines or vehicles.

The system 10 shown in Figure 1 includes four pump modules 12, which in this embodiment each produces an output that corresponds to a respective service of one or more ECMs (not shown), which ECMs may be substantially as described in WO 2021/044148 for example. The, or each, ECM is driven by a prime mover via a common driveshaft that extends through the or each ECM. The common driveshaft may also be a plurality of driveshafts, in driving relationship with one another. The prime mover may be an internal combustion engine or an electric motor, for example.

Each ECM includes a set of PCUs that are arranged along and around the driveshaft. A PCU comprises a piston and a cylinder, defining a working chamber therebetween. Reciprocation of the piston relative to the cylinder occurs due to rotation of the driveshaft during pumping, causing pressurisation of hydraulic fluid in the working chamber.

The PCUs are divided into groups, each group defining a respective one of the pump modules 12. The respective ports of a group of PCUs defining a pump module 12 are combined at an endplate of the ECM to form a port of the ECM, the ECM port output in turn defining a 'service'. The pumping capacity of a pump module 12 therefore corresponds to the combined capacities of the associated PCUs. The pump modules 12 may not all have the same number of associated PCUs, and hence the pump modules 12 may all have the same pumping capacity, or they may be configured with differing capacities. The PCUs of a given ECM typically all have the same pumping capacity, although in principle the PCUs could also have differing pumping capacities.

Typically, the PCUs of a given pump module 12 are configured to operate out of phase with each other, such that the respective phases are evenly spread over the 360° range of the driveshaft, to produce a substantially steady and balanced output from the pump module 12 in operation.

Each PCU draws fluid into its working chamber through a respective low-pressure valve, and then subsequently displaces that fluid from the working chamber at elevated pressure through a respective high-pressure valve. Accordingly, the output from each PCU can be varied individually through appropriate control of the respective high-pressure valves and low-pressure valves. In particular, the low-pressure valves can be controlled to regulate the volume of fluid that is admitted to the working chambers on each cycle, which in turn dictates the extent of pressurisation that will occur as the piston completes its compression stroke. A low-pressure valve can also be not energised to close, such that it remains open to the low pressure connection on both intake and outlet strokes, to produce inactive cycles of the corresponding PCU, so that the PCU effectively idles. This may be required, for example, when pumping of a pump module 12 is to cease for a short period.

Accordingly, each pump module 12, and each of its constituent PCUs, is independently-controllable, such that it can output hydraulic fluid at a pressure and flow rate that can be varied independently from the corresponding parameters of fluid output by the other pump modules 12. Accordingly, the pump modules 12 can be operated individually.

The pump modules 12 source hydraulic fluid from a supply line that is connected to a tank (not shown), which therefore acts as a source of low pressure fluid. The pump modules 12 may then displace the hydraulic fluid at elevated pressures to drive actuators of the system 10.

In this respect, although omitted from Figure 1 for simplicity, a main control valve may receive pressurised hydraulic fluid discharged from the pump modules 12, and direct that fluid to individual actuators of the excavator, as required to effect one or more actions.

Operation of the main control valve is controlled by a control system 14, which as shown in the simplified representation in Figure 1 includes an I/O (Input/Output) interface 16 and a processing module 18. The I/O interface 16 receives signals indicative of user demands as input by an operator or controlling entity of the excavator. The I/O interface 16 further receives signals indicative of the state of the excavator, including the respective states of the components of the hydraulic system 10 as indicated by a suite of sensors (not shown). The received signals are processed by the processing module 18 to generate control commands that are configured to effect any actions demanded of the excavator, taking into account the state of the excavator, as is conventional. The control commands are then issued by the control system 14 from the I/O interface 16 along communication lines indicated as dashed lines in Figure 1, to control operation of the pump modules 12 as required.

In one example, the main control valve is divided into: a first block portion associated with a first hydraulic consumer circuit 20a; and a second block portion associated with a second hydraulic consumer circuit 20b. The first and second hydraulic circuits 20a, 20b are shown illustratively in Figure 1, which indicates that each of the first and second hydraulic circuits 20a, 20b includes a respective set of hydraulic consumers 22, such as actuators or hydraulic accumulators. Each hydraulic circuit 20a, 20b conveys hydraulic fluid through suitable conduits to its respective set of consumers 22. The skilled reader will appreciate that the particular set of actuators or other consumers included in practice will vary according to the requirements of the system 10. It is noted that, in embodiments of the invention, connections may be made directly to a single hydraulic consumer that is not part of a circuit including other consumers. In this case, the consumer and the fluid connections to and from the consumer may nonetheless be regarded as defining a hydraulic circuit.

The first and second hydraulic consumer circuits 20a, 20b are connected to the tank through one or more drain lines (not shown). Low pressure return fluid from the circuits 20a, 20b, typically having been displaced due to the drive operation of one or more of the actuators 22, is returned to the tank via the drain line(s), to be recirculated through the system 10.

Each block portion of the main control valve receives pressurised hydraulic fluid through a respective high-pressure manifold. Accordingly, a first high-pressure manifold 26a connects to the first block portion and a second high-pressure manifold 26b connects to the second block portion. In turn, the first high-pressure manifold 26a is connected to the first hydraulic consumer circuit 20a through the first block portion, and the second high-pressure manifold 26b is connected to the second hydraulic consumer circuit 20b through the second block portion.

The skilled reader will appreciate that a high-pressure manifold may be embodied in various ways, including as a drilling or cavity within a valve block or other body, or as a dedicated separate hydraulic line or conduit.

The elements of the system 10 described thus far are broadly similar to those of the system described in WO 2021/044148. However, in this embodiment the apportioning block disclosed in WO 2021/044148 is replaced by a valve arrangement 28 that provides similar functionality but, advantageously, with fewer valves.

In this respect, the valve arrangement 28 is disposed between the pump modules 12 and the high-pressure manifolds 26a, 26b, and is operable to direct individual services to either one of the high-pressure manifolds 26a, 26b, and therefore to the associated hydraulic circuit 20a, 20b, in a dynamic manner according to instantaneous flow requirements demanded by the operator. In this respect, meeting such requirements is managed and implemented by the control system 14, which controls operation of the valve arrangement 28 and the pump modules 12.

Accordingly, the valve arrangement 28 defines a first output 30a that discharges fluid into the first high-pressure manifold 26a, and a second output 30b that discharges fluid into the second high-pressure manifold 26b. The valve arrangement 28 may be embodied as a hydraulic valve block or manifold block, for example, in which case the first and second outputs 30a, 30b are defined by physical ports of the block, for example on an exterior surface of the block. In other embodiments, the valve arrangement 28 may be configured in a more distributed manner using separate valves, potentially not in the same block, in which case the outputs may be defined more notionally.

In this embodiment, the valve arrangement 28 comprises a pair of four-way, three-position allocation valves 32, defining a first allocation valve 32a and a second allocation valve 32b, that each has the general form of a spool valve. The first and second allocation valves 32a, 32b act in tandem to allocate the pump modules 12 between the first and second high-pressure manifolds 26a, 26b in a dynamic manner. It is noted that in other embodiments only one allocation valve 32 is required, and conversely further embodiments use more than two allocation valves 32.

Optionally, in a variant of the arrangement shown in Figure 1, further pump modules 12 may be added that bypass the allocation valves 32 and connect directly to one of the first and second outputs 30a, 30b. Configuring the valve arrangement 28 with such permanent connections may simplify operation of the valve arrangement 28 by reducing the number of services that must be allocated, whilst retaining the ability to allocate the remaining four pump modules 12. This balances flexibility of operation with system complexity, in that the majority of the maximum total combined output of the pump modules 12 can still be allocated to either one of the outputs, and therefore to the connected high-pressure manifolds 26a, 26b, at any time.

The first allocation valve 32a, shown to the left in Figure 1, has two input ports 34 that are each connected to a respective pump module 12. Correspondingly, the second allocation valve 32b, shown to the right in Figure 1, has two input ports 34 that are each connected to a respective pump module 12. Each of the first and second allocation valves 32a, 32b has two output ports 36. For each allocation valve 32, one output port 36 is connected to the first output 30a of the valve arrangement 28 and the other output port 36 is connected to the second output 30b of the valve arrangement 28.

Each allocation valve 32 is therefore configured as a ganging valve that acts to gang two services. Accordingly, each allocation valve 32 is furnished with two high-pressure input ports 34, instead of one high-pressure input port and a tank connection as is conventional for four-way spool valves. In shorthand, the allocation valves 32 are configured as PP-AB, or more specifically P₁P₂-AB spool valves (where P₁ identifies the first service connection, and P₂ identifies the second service connection), and not as PT-AB spool valves. This reflects the fact that the allocation valves 32 are configured for ganging the services of ECMs, and therefore do not require tank connections. In contrast, conventional switching valves are configured to complement the nature operation of bidirectional actuators with two ports, which require a pressure connection and a tank connection, hence conventional four-way spool valves are not configured to provide two high pressure pump connections.

Each allocation valve 32 has three operating positions: a first operating position, in which the two input ports 34 and their associated services are connected to the output port 36 that connects to the first high-pressure manifold 26a, whilst being isolated from the other output port 36; a second operating position, in which the two input ports 34 are connected to the output port 36 that connects to the second high-pressure manifold 26b, whilst being isolated from the other output port 36; and a third operating position, in which the input ports 34 are isolated from one another and each input port 34 is connected to a respective one of the output ports 36. It follows that the output ports 36 are isolated from one another in each of the operating positions.

Accordingly, taking the first allocation valve 32a as an example, to connect the left connected service to the first hydraulic consumer circuit 20a via the first high-pressure manifold 26a and the right connected service to the second hydraulic consumer circuit 20b via the second high-pressure manifold 26b, the first allocation valve 32a is moved to its third position, which is the state depicted in Figure 1. Conversely, to connect both services to the first hydraulic consumer circuit 20a, the first allocation valve 32a is moved to the first operating position, while moving the first allocation valve 32a to the second operating position will connect the two services to the second hydraulic consumer circuit 20b. By performing similar actions in the second allocation valve 32b, a range of different service allocations can be realised.

Not every service can be allocated entirely independently. For example, the first allocation valve 32a cannot allocate the right connected service to the first hydraulic consumer circuit 20a at the same time as allocating the left connected service to the second hydraulic consumer circuit 20b. However, the pumping capacities of the pump modules 12 can be configured such that any desired number of PCUs of the ECM(s) can be allocated to each hydraulic consumer circuit 20a, 20b at any given time, by configuring the first and second allocation valves 32a, 32b accordingly.

It is emphasised that, as for the grouping of the PCUs within the ECMs, the valve arrangement 28 can be configured differently to the example shown in Figure 1 to provide different multiples of PCUs being connected with different pump module sizes, and from different ECMs, as may be required for a particular application.

Figure 1 also shows that the valve arrangement 28 includes four check valves 38, each being disposed downstream of a respective output port 36 of the allocation valves 32. As shall become clear from the description that follows, each allocation valve 32 is configured to have open transitions as the spool moves between its operating positions, to prevent hydraulic deadheading during these transitions. This beneficially avoids a need to provide pressure relief valves to mitigate such deadheading. The check valves 38 prevent backflow from the high-pressure manifolds 26a, 26b into the allocation valves 32, and thus maintain fluid isolation between the first and second high-pressure manifolds 26a, 26b during the open transitions. The check valves 38 also prevent leakage from the output ports 36 to the tank or to the pump modules 12.

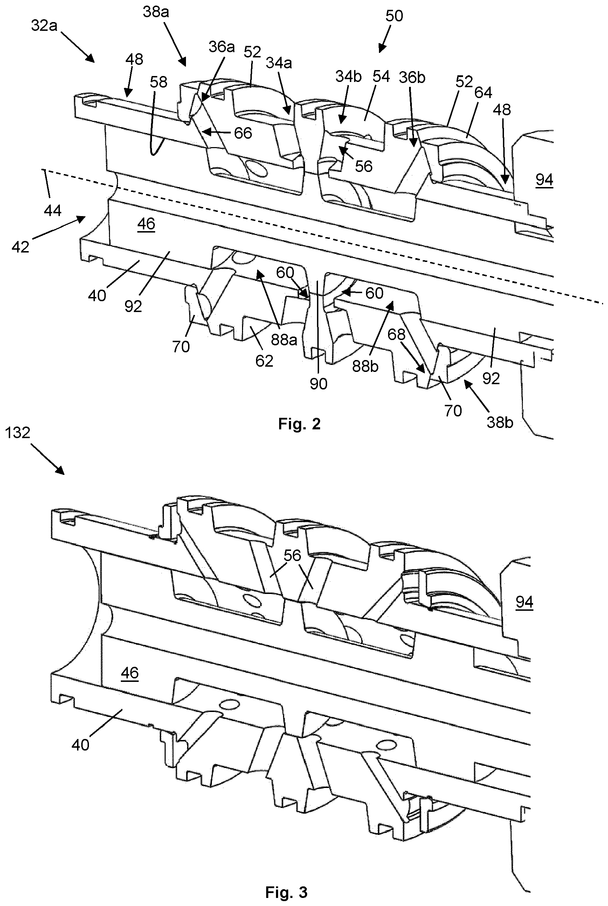

In this embodiment, the check valves 38 are formed integrally with the allocation valves 32, so that each allocation valve 32 includes a pair of integral check valves 38, one for each output port 36. Each allocation valve 32 may therefore be considered an integrated valve assembly that comprises a spool valve and a pair of check valves, and may therefore be characterised as a spool valve assembly. This is made clearer in Figure 2, which shows the first allocation valve 32a in axial cross section. It is noted that the second allocation valve 32b is substantially identical to the first allocation valve 32a in this embodiment.

Relative to arrangements having separate check valves, combining the check valves 38 with the spool valve to produce an integrated allocation valve 32 as in the present embodiment provides an improvement in packaging and installation, and a potential cost reduction of an allocation block and valves, as various valves are combined into a single cartridge or valve assembly.

Referring to Figure 2, the first allocation valve 32a comprises an elongate valve housing 40 that encloses a cylindrical valve cavity 42 that defines a valve chamber whose central axis defines a valve axis 44. A valve member, specifically a spool member or 'spool' 46, is arranged for translating back-and-forth movement along the valve axis 44 between discrete positions within the valve cavity 42, to open and close flow paths between the input and output ports 34, 36, in the conventional manner. The valve housing 40 and the spool 46 may be formed from any suitable material, such as steel for example.

The exterior of the valve housing 40 has generally cylindrical end regions 48 separated by a central region of enlarged diameter defining a port region 50. Each axial end of the port region 50 has an end formation 52 extending radially outwards. A central formation 54 extends radially outwardly from an axial centre of the port region 50. The port region 50 is generally symmetrical about a radial plane intersecting the central formation 54.

The two input ports 34 of the allocation valve 32 are disposed one to each side of the central formation 54, so that a first input port 34a is defined to the left of the central formation 54, as viewed in Figure 2, and the remaining input port defines a second input port 34b. Each input port 34 is defined by a respective circumferential array of openings centred on the valve axis 44, the openings being formed by passages (potentially drillings) 56 disposed directly adjacent to the central formation 54.

Each passage 56 extends generally radially towards the valve cavity 42, albeit gently inclined so that respective circumferentially-aligned passages 56 of the input ports 34 converge gradually with one another moving radially inwards, to define input passages 56 that penetrate the housing 40. A cylindrical wall 58 of the valve cavity 42 includes a pair of axially-spaced annular slots 60 that extend radially into, and circumferentially around, the valve cavity wall 58. Each set of input passages 56 opens into a respective one of these slots 60, so that each slot defines an inlet slot 60 that communicates with a respective input port 34. Accordingly, each input port 34 is fluidly connected to the valve cavity 42 by its respective input passages 56 and inlet slot 60.

As Figure 3 shows, in an allocation valve 132 of an alternative embodiment the slots 60 in the valve cavity wall 58 are omitted and the input passages 56 are simple through-holes. The embodiment shown in Figure 3 is otherwise identical to that shown in Figure 2.

Each end formation 52 includes: a substantially planar inner face 62 that is orthogonal to the valve axis 44 and faces the corresponding face 62 of the opposing end formation 52; and an outwardly-directed frustoconical face 64 on an opposite side of the end formation 52. The frustoconical face 64 is inclined by a small angle relative to a plane extending orthogonally to the valve axis 44, such that the respective frustoconical faces 64 of the end formations 52 converge gradually in a radially outward direction.

Each frustoconical face 64 includes a circular array of openings defining a respective one of the output ports 36 of the allocation valve 32, so that a first output port 36a is positioned at the end formation 52 towards the left of the valve in Figure 2, and a second output port 36b is defined on the end formation 52 towards the right. The openings of each array are equi-spaced circumferentially around the frustoconical face 64 at a common radius from the valve axis 44. Each opening defines an exit from a passage that penetrates the housing 40 at approximately 60° with respect to the valve axis 44, to form an output passage 66 that creates a corresponding opening on the valve cavity wall 58, such that the valve cavity wall 58 includes a circular array of openings for each output port 36. Accordingly, each output port 36 is fluidly connected to the valve cavity 42 by its respective output passages 66. It is noted that the angle of the output passage 66 may vary in other embodiments and can be optimised to suit the requirements of each application.

Each frustoconical face 64 also forms part of a respective integral check valve 38 of the allocation valve. In this respect, annular portions of the frustoconical face 64 lying radially inward and outward of the output port openings collectively define a valve seat 68 that is inclined relative to the valve axis 44. The valve seat 68 cooperates with a respective check valve member 70 to form a check valve 38, the check valve member 70 being configured to move axially to open and close the associated output port 36, so that the check valve 38 generally operates as a poppet valve. Accordingly, a first check valve 38a is integrated with the first output port 36a, and a second check valve 38b is integrated with the second output port 36b. Each check valve 38, when in a closed position, closes the respective output port 36, and prevents backflow into its associated output port 36 from the connected high-pressure manifold 26a, 26b.

The first check valve 38a is described below, but it is noted that the first and second check valves 38a, 38b are substantially identical in this embodiment.

The check valve member 70 of the first check valve 38a is defined by an annular member of steel or another suitable material. The check valve member 70 has a cylindrical inner wall 72 that is sized for a loose sliding fit with the exterior surface of the leftmost end region 48 of the valve housing 40, such that the valve housing 40 acts to locate the check valve member 70 radially. The check valve member 70 is received on this end region 48 of the valve housing 40 to encircle the valve housing 40 and the spool 46 within.

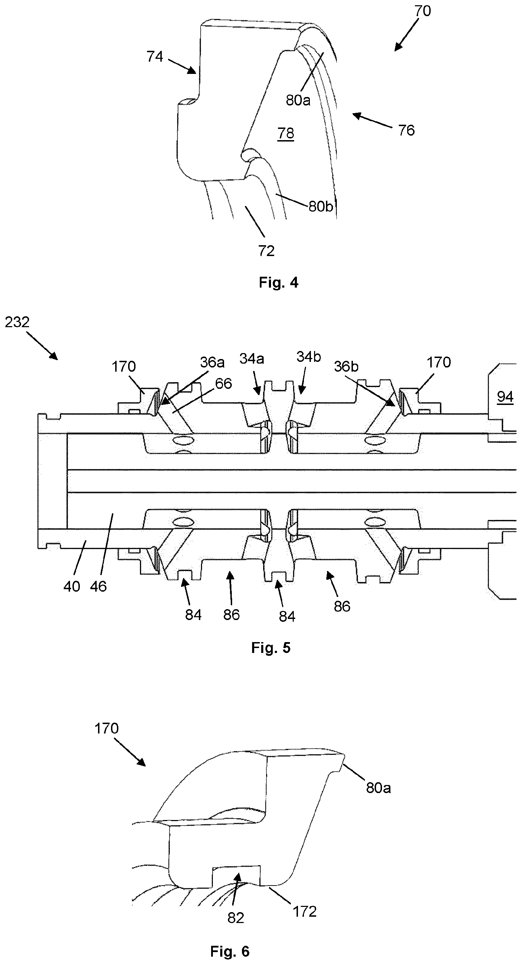

Referring now also to Figure 4, which shows the check valve member 70 in more detail, a rear face of the check valve member 70, shown to the left in Figure 4, has a planar inner portion surmounted by a planar outer portion that is recessed axially inwardly from the inner portion. The recessed outer portion creates a spring seat 74 for a spring (not shown) that is used to bias the check valve member 70 into engagement with the valve seat 68, such that flow is allowed only in one direction.

The spring is a coil spring that is received over the end region 48 of the valve housing 40 to lie coaxially with the valve axis 44 and therefore in concentric relation with the end region 48 of the valve housing 40. The spring may act between the spring seat 74 of the check valve member 70 and a wall of a valve block in which the allocation valve 32 is housed, for example, or the distal end of the spring may be fixed to the valve housing 40, for example by a circlip that locks into an annular groove formed on the valve housing 40.

An opposed side of the check valve member 70, shown to the right in Figure 4, defines an engagement face 76 having a frustoconical profile corresponding to that of the valve seat 68. A central region of the engagement face 76 is recessed axially to create an annular groove 78 that aligns radially with the openings of the output port 36 when the check valve member 70 is seated. Above and below the annular groove 78, relatively thin frustoconical ring-like surfaces are defined that represent inner and outer sealing faces 80 of the check valve member 70. The outer sealing face 80a, or outer sealing line, shown uppermost in Figure 4, surrounds the openings of the output port 36 when the check valve member 70 is seated and thus creates a continuous circular seal around the output port 36 that prevents fluid from flowing radially outwardly from the openings of the output port 36. Correspondingly, the inner sealing face 80b creates a second continuous circular seal that extends radially inwardly from the output port 36 openings. Accordingly, collectively the inner and outer sealing faces 80 prevent fluid flow in any direction to or from the output port 36 when the check valve 38 is closed.

It follows that the check valve 38 is configured as a face sealing valve with two sealing interfaces that provide a fluid seal on both sides of the high-pressure outlet. Providing the annular recess 78 between the first and second sealing faces 80a, 80b aids accurate engagement of the sealing faces 80 with the valve seat 68 and thus promotes effective sealing.

Each check valve member 70 is configured to move axially back-and-forth along the valve housing 40, and therefore parallel to the valve axis 44, to engage and disengage the associated valve seat 68 to open and close the respective output port 36. Elegantly, this movement of the check valve member 70 is guided and constrained by the valve housing 40 itself.

It follows from the above that the respective check valve members 70 of the first and second check valves 38a, 38b move in mutually opposed directions to open and close their respective output ports 36.

Biasing each check valve member 70 into engagement with its valve seat 68 ensures that the associated output port 36 remains closed until fluid pressure in the output passages 66 of the output port 36 creates a pressure differential that is sufficient to overcome the force provided by the spring. The spring force therefore defines a threshold pressure at which the check valve 38 will open to allow fluid to be discharged from the output port 36. It follows that the check valve 38 acts to prevent backflow of fluid into the output port 36 from a connected high-pressure manifold 26 when pressure in the manifold 26 exceeds that in the output passages 66 of the output port 36. This preserves isolation between the high-pressure manifolds 26a, 26b and prevents hydraulic deadheading while the spool 46 moves.

Figures 5 and 6 show an allocation valve 232 according to a different embodiment. The allocation valve 232 is substantially identical to that shown in Figure 2, aside from having different check valve members 170, one of which is shown in detail in Figure 6. This alternative check valve member 170 has the same outer sealing face 80a as the check valve member 70 of Figure 4, to form a continuous circular seal that surrounds the openings of the output passages 66 when the check valve member 170 is seated. However, in the variant of Figures 5 and 6 the annular recess in the frustoconical face of the check valve member 170 is extended downwardly such that there is no inner sealing face. Instead, a cylindrical inner wall 172 of the check valve member 170 is provided with an annular recess 82 that extends radially into the check valve member 170, the recess 82 being configured to receive a seal such as an O-ring that forms a sliding seal against the external cylindrical surface of the end region 48 of the valve housing 40.

Accordingly, the check valve member 170 shown in Figures 5 and 6 is configured for both face-sealing and slide sealing. Since the check valve member 170 of Figures 5 and 6 has only one face-sealing line, compared with the two face-sealing lines of the preceding embodiment, manufacturing tolerances are not as constrained. It follows that the risk of leakage may be reduced for the embodiment of Figures 5 and 6 relative to the preceding embodiment.

As there is only one sealing line on the valve seat 68 in the embodiment of Figures 5 and 6, the check valve member 170 also allows more space for the output passages 66, which can therefore be of greater diameter than those of the embodiment shown in Figure 2. Alternatively, or additionally, the valve seat 68 can be radially narrower whilst accommodating output passages 66 of similar size in the Figure 5 embodiment.

Conversely, unlike the preceding embodiment in which both sealing lines benefit from an increasing sealing force as pressure in the high-pressure manifold 26 increases, the integrity of the slide seal of the embodiment of Figures 5 and 6 depends only on compression of the O-ring, which is substantially constant.

Figures 2 and 5 show identical valve housings 40 and so shall now be referred to collectively. The central formation 54 and each of the end formations 52 of the port region 50 are provided with annular grooves 84 in their respective radially outer cylindrical surfaces, each of these grooves 84 being provided to accommodate a seal such as an O-ring, to enable the two high and the two low pressure regions of the input and output ports 34, 36 to be isolated from one another externally. In this respect, the valve housing 40 is configured to be received in a bore of a valve block (not shown), where the O-rings seal against the interior of the bore.

Between the central formation 54 and each end formation 52, annular recesses 86 are defined that create annular voids that encircle the valve housing 40 when the valve housing 40 is received in the bore of the valve block, these voids defining inlet galleries. Passages formed in the valve block convey hydraulic fluid to fill the inlet galleries, in use, allowing the fluid to flow from the inlet galleries through each of the associated input passages 56 into the valve cavity 42, and thereby distributing and balancing the flow around the valve 32, 232.

Correspondingly, the narrower diameter end regions 48 of the valve housing 40 create similar voids to each side of the end formations 52, defining outlet galleries that collect fluid discharged through the output passages 66 of the output ports 36.

In one implementation, the allocation valves 32 may be arranged side-by-side in a row in the valve block, being housed in respective parallel bores in the block. This means that the respective output ports 36 of the allocation valves 32 that will connect to the first output 30a of the valve arrangement 28 are aligned at one end of the allocation valves 32, and correspondingly the respective output ports 36 of the allocation valves 32 that connect to the second output 30b of the valve arrangement 28 are aligned at the opposite end of the allocation valves 32. Accordingly, the output ports 36 that connect to the first output 30a can share a first outlet gallery that surrounds the respective output ports 36 of both allocation valves 32. Correspondingly, the output ports 36 that connect to the second output 30b of the valve arrangement 28 can share a second outlet gallery. It will be appreciated that further allocation valves could be accommodated in a similar way by expanding the shared outlet galleries. In this way, only two outlet galleries are required to connect the outputs of any number of allocation valves to the first and second outputs 30a, 30b of the valve arrangement 28. This provides a compact packaging arrangement and reduced complexity for the valve block.

It is noted that positioning the output ports 36 at opposed ends of the port region 50 beneficially spaces the resulting outlet galleries from each other. This allows drillways that extend through the valve block from each outlet gallery to the first and second outputs 30a, 30b of the valve arrangement 28, to be spaced from each other, meaning that the first and second outputs 30a, 30b of the valve arrangement 28 can be correspondingly spaced. This spacing of the first and second outputs 30a, 30b makes for easier manufacture of the valve block, in particular by creating more room for making connections at the surface of the valve block. Any means for joining a hose or fitment to an output of the valve block requires space. The allocation valve 32 therefore provides this by spacing the output ports 36 and thereby creating the required space between the first and second outputs 30a, 30b.

Turning now to the spool 46 and its operation, as is conventional, the spool 46 is generally cylindrical having different diameters of cylinder from the rest of the spool 46 at first and second identical axially-spaced annular recesses 88a, 88b, the first annular recess 88a being shown to the left in Figures 2, 3 and 5. In this respect, the spool 46 is identical in Figures 2, 3 and 5 and so these Figures are now described collectively. The annular recesses 88a, 88b are separated by a radial protrusion defining a central land 90. The full diameter portions of the spool 46 at each end of the spool 46, outward of the annular recesses 88a, 88b, define end lands 92. Each of the lands 90, 92 is sized for a sliding seal with the valve cavity wall 58.

The spacing between each end land 92 and the central land 90, which is determined by the axial extent of each annular recess 88, exceeds the distance between an array of output passage openings and the nearest array of input passage openings.

Correspondingly, the central land 90 has an axial width that is sized to fit between the two arrays of input passage openings on the valve cavity wall 58. The axial width of the central land 90 is also sized to be slightly narrower than the axial width of the inlet slots 60, for example approximately 90% of the width of each inlet slot 60, to enable open transitions as described below.

When the spool 46 is positioned neutrally with the central land 90 between the arrays of input passage openings, as shown in Figures 2, 3 and 5, the arrays of input passage openings - and therefore the input ports 34 - are isolated from each other by the central land 90. Similarly, the arrays of output passage openings - and therefore the output ports 36 - are also isolated from one another by the central land 90. Meanwhile, the end lands 92 ensure that fluid entering the valve cavity 42 through the input passages 56 cannot escape from the annular spaces defined by the annular recesses 88 of the spool 46 by any route other than through the output passages 66.

With the spool 46 in the neutral position shown in Figures 2, 3 and 5, fluid entering the valve cavity 42 through the input passages 56 of the first input port 34a, for example, can flow to the output passages 66 of the first output port 36a through the annular space defined by the first annular recess 88a of the spool 46. In this way, the first input port 34a is in fluid communication with the first output port 36a. Similarly, the second annular recess 88b of the spool 46 creates fluid communication between the second input port 34b and the second output port 36b. The neutral position shown in Figures 2, 3 and 5 therefore corresponds to the third operating position of the allocation valve 32 that is described above.

Moving the spool 46 to the right, with respect to the orientation shown in Figures 2, 3 and 5, to position the central land 90 between the openings of the second input port 34b and the openings of the second output port 36b, will connect the first input port 34a, the second input port 34b and the first output port 36a together via the space within the first annular recess 88a, whilst isolating the second output port 36b from the other ports. This corresponds to the first operating position for the allocation valve 32 that is referred to above, in which both input ports 34 are allocated to the first output port 36a.

Conversely, moving the spool 46 to the left to position the central land 90 between the openings of the first input port 34a and the openings of the first output port 36a will connect the first input port 34a, the second input port 34b and the second output port 36b together via the second annular recess 88b. This corresponds to the second operating position for the allocation valve 32 that is referred to above, in which both inputs are allocated to the second output port 36b.

As noted above, the allocation valves 32 are configured for open transitions. In this respect, as the width of the central land 90 is smaller than the width of the inlet slots 60 in the valve cavity 42, the central land 90 never entirely blocks an inlet slot 60, and therefore the associated input port 34, while the spool 46 moves between operating positions. This avoids deadheading of the corresponding pump module 12 that would occur if an input port 34 were closed entirely. Accordingly, configuring the allocation valves 32 for open transitions avoids the need to provide pressure relief valves as would otherwise be required to prevent deadheading, thereby further reducing the number of valves required in the system 10.

However, while the central land 90 passes over an inlet slot 60, the slot 60 may be occluded by up to 90% to produce a small orifice through which fluid can continue to flow into the valve cavity 42 from the inlet slot 60. This creates a flow constriction that produces a drop in pressure in fluid flowing into the valve cavity 42. So, for example, if the spool 46 moves leftwards from the neutral position shown in Figure 2, the pressure in the region of valve cavity 42 around the first annular recess 88a, and therefore in the output passages 66 of the first output port 36a, drops considerably. This will lead to pressure in the output passages 66 falling below that in the high-pressure manifold 26a, 26b to which the first output port 36a is connected. The resulting pressure differential causes the first check valve 38a to close. Without the check valve 38a, fluid would flow from the high-pressure manifold 26a, 26b into the output passages 66.

In addition, a moment will arise during the transition in which a small orifice is created on each side of the central land 90, thereby creating a flow path between the first and second output ports 36a, 36b via the inlet slot 60 of the first input port 34a and potentially allowing fluid to cross from one manifold 26a, 26b to the other. The check valves 38 therefore also maintain isolation between the first and second high-pressure manifolds 26a, 26b.

The above makes clear that positioning the two input ports 34 between the output ports 36 enables the allocation valve 32 to be configured to provide the operating positions and associated service allocation functionality described above. Specifically, the allocation valve 32 is able to gang the services connected to the input ports 34 and fluidly connect and thus allocate them to either output port 36, whilst also being capable of isolating the input ports 34 from each other and allocating them to respective ones of the output ports 36. In this way, the allocation valve 32 provides functionality that previously necessitated multiple separate valves. Reducing the number of valves, or valve bores in a valve block, has a great impact on cost, reliability and complexity in a hydraulic system.

Meanwhile, the combination of a spool 46 that is arranged for open transitions and check valves 38 on the output ports 36 provides for a valve assembly that has low leakage and thus maintains system efficiency. The allocation valve 32 of this embodiment is also not significantly larger than a conventional spool valve, despite incorporating the check valves 38. Accordingly, the allocation valve 32 beneficially minimises space requirements by removing the space previously required to accommodate the check valves 38, and/or eliminating the separate valve block cavities required for the check valves 38.

As an additional measure for managing transitions of the spools 46 of the allocation valves 32 to avoid hydraulic deadheading, the control system 14 may be configured to reduce, and optionally cease, pumping of pump modules 12 that are connected to an allocation valve 32 whose spool 46 is moving between operating positions. For example, the low-pressure valves of the relevant PCUs may be not energised to be held closed, to thus remain open to the low pressure connection during both intake and outlet strokes, such that the PCUs perform inactive cycles and therefore cease pumping.

Determining that a valve transition is underway so as to reduce or cease pumping may be achieved in various ways. For example, the control system 14 may reduce or cease pumping of the relevant pump modules 12 in response to a control command that initiates a transition of an allocation valve 32 between operating states. The time taken for the spool 46 to commence movement in response to such a command may be taken into account, for example using a look-up table.

Alternatively, the control system 14 may detect the position of the spool 46 more actively, for example through the use of dedicated position sensors or pressure sensors, including light-based, contact-based, or inductive sensors, for example. The valve position may also be determined based on measurements of related characteristics, such as back-EMF feedback from movement of the spool 46 and an inductive signature of a solenoid that actuates movement of the spool 46.

It is also possible to detect a valve transition by monitoring pressure in the pump modules 12, noting that this will be influenced by back pressure generated by a valve transition.

Movement of the spool 46 can be actuated in any suitable way. Figures 2 and 3 show the allocation valve 32 mounted to an electronic actuator 94, specifically a solenoid actuator, that is operable to move the spool 46 axially back-and-forth between its operating positions. This is also represented schematically in Figure 1, which shows the full valve arrangement 28 including both allocation valves 32 configured for such electronic actuation. Figure 1 also shows the transition states between each operating position in each allocation valve 32, with the orifices created around the central land 90 during the transition denoted by fixed orifice symbols.

In this example, as is known in the field of spool valves, each allocation valve 32 includes a solenoid actuator 94 at each end, such that the valve 32 is double actuated. This double actuation facilitates accurate movement of the spool 46 in each direction between its three operating positions. Another embodiment features single-actuated valves, in which a return spring or other biasing means is provided at the opposed end of the spool 46 to the actuator.

Further allocation valves 32 may be added to the valve arrangement 28 to allocate additional services or other pump modules 12 to the common lines connecting to the first and second outputs 30a, 30b of the valve arrangement 28, and in turn to the high-pressure manifolds 26a, 26b. This demonstrates the scalability of the arrangement, in that further allocation valves 32 may be added and connected to the common lines.

Figure 1 also shows drain lines 96 extending from each end of the allocation valves 32, which provide vents to chambers of the allocation valves 32 housing the solenoids 94. This helps to extend the lifetime of the solenoids 94. As shown illustratively in Figure 1, each drain line 96 connects to a low pressure reservoir or region, which may be a tank, possibly the main tank of the system 10 or separate auxiliary tanks, for example.

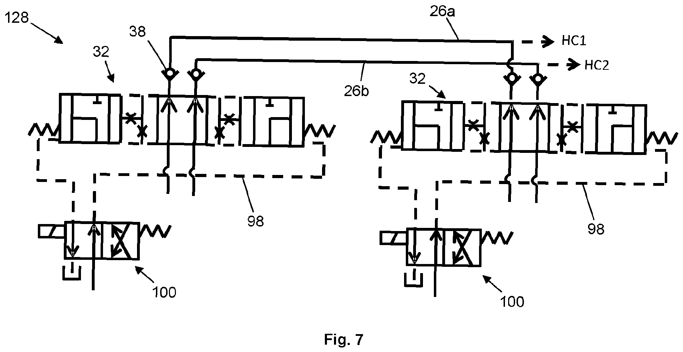

Figure 7 shows an alternative valve arrangement 128 that could be substituted for that of the system 10 shown in Figure 1 and connected to the pump modules (not shown in Figure 7) to allocate services to the first and second high-pressure manifolds 26a, 26b in the same way.

In Figure 7, the allocation valves 32 are configured for hydraulic actuation as is known in the art. In this respect, each allocation valve 32 is provided with a pilot chamber at each end of the spool 46. The pilot chambers are connected by respective pilot lines 98 to respective outputs of a pilot valve 100, with a respective pilot valve provided for each allocation valve 32. The pilot valve 100 acts to direct pressurised hydraulic fluid to one of the pilot chambers. This creates a pressure differential between the ends of the spool 46 that moves the spool 46 between positions, according to the direction of the differential. The pilot valve 100 may be a spool valve, which may itself be actuated either electronically or hydraulically.

The pilot valve 100 may be integrated with the allocation valve 32, or alternatively provided separately to the allocation valve 32 within the valve arrangement 128.

The arrangement shown in Figure 7 is otherwise identical to that of Figure 1.

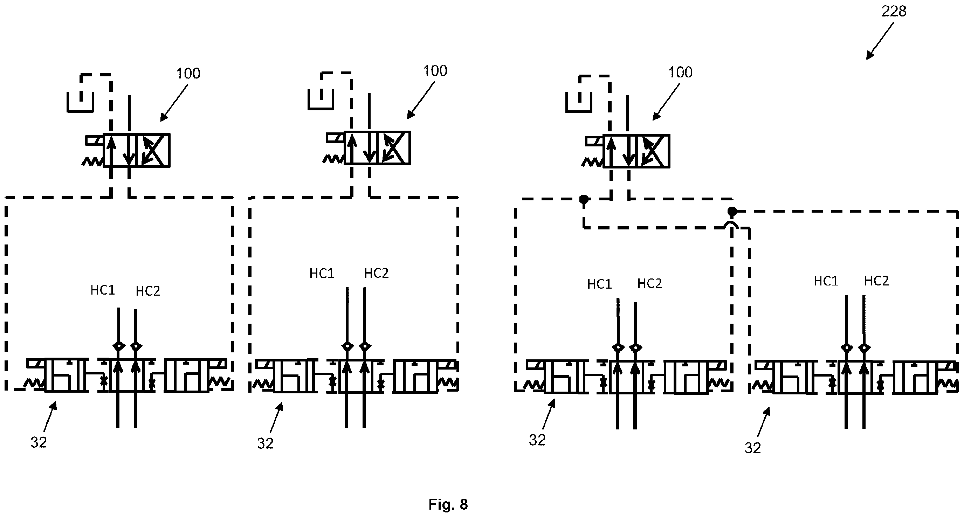

Figure 8 shows a variant of the Figure 7 arrangement, in which a valve arrangement 228 includes two further allocation valves 32 are added to support additional pump modules 12, which are omitted for simplicity. A first pair of allocation valves 32, shown to the left in Figure 8, correspond to the pair of valves 32 shown in Figure 7. The second pair of valves 32, shown to the right in Figure 8, are actuated in unison by a common pilot valve. Accordingly, whereas the first pair of allocation valves 32 can be controlled independently, the second pair of valves 32 will always be in the same operating position, such that the second pair of valves 32 are controlled together in unison as a unit. This arrangement is therefore useful where allocating some services or other pump modules 12 in groups is acceptable, and in that context offers the benefit of a reduced number of pilot valves 100 and associated control complexity.

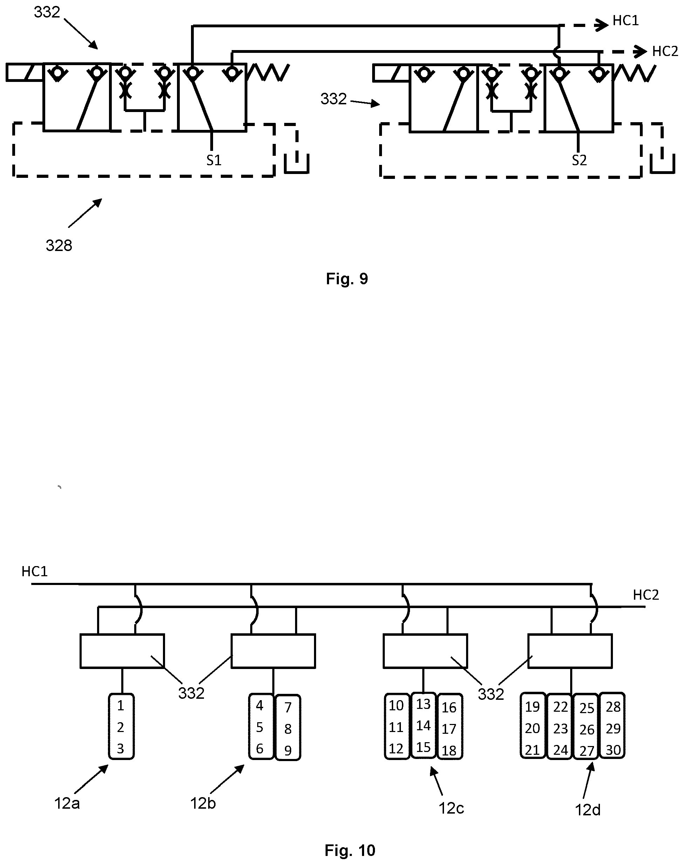

Figure 9 shows another alternative valve arrangement 328 for the system 10 of Figure 1, in which two three-way, two-position allocation valves 332 are used to allocate two services, designated as 'S1' and 'S2', between two hydraulic circuits designated as 'HC1' and 'HC2'.

Figure 10 shows how such a configuration can be extended and used to optimise flexibility of allocation of individual PCUs of ECMs, and is described below. The skilled person will therefore appreciate that the principles illustrated in Figures 9 and 10 could be adapted for implementation using four-way allocation valves.

The allocation valves 332 of Figure 9 each have a single input port 34 and two output ports 36, but are otherwise similar to the four-way allocation valves 32 described above and, in particular, are arranged for open transitions and include integrated check valves 38 for each output port 36.

Each allocation valve 332 is configured as a spool valve that can select between two operating positions: a first operating position in which the input port 34 is connected to one output port 36, and a second operating position in which the input port 34 is connected to the other output port 36. This enables the allocation valve 332 to direct its connected service to either the first high-pressure manifold 26a or to the second high-pressure manifold 26b. Accordingly, each service that is provided with an associated allocation valve 332 can be allocated independently to either one of the hydraulic consumer circuits 20a, 20b according to the demands of the system 10.

Aside from the integrated check valves 38, such spool valves are known in the art and so are not described in detail here.

Finally, Figure 10 illustrates a way in which PCUs of two ECMs, each having twelve PCUs, may be grouped into pump modules 12 to minimise the number of three-way allocation valves 332 that are required, while offering the ability to allocate any multiple of three PCUs to either of a pair of hydraulic consumer circuits.

Specifically, Figure 10 shows four pump modules 12 that are configured such that the number of PCUs that they contain increases in a stepwise manner from one pump module 12 to the next moving from left to right in Figure 10. The PCUs of the first ECM are divided into three pump modules 12: a first pump module 12a having three PCUs; a second pump module 12b having six PCUs; and a third pump module 12c having nine PCUs. Meanwhile, a fourth pump module 12b, which is shown furthest to the right, has twelve PCUs and so includes all of the PCUs of the second ECM.

Each pump module 12 is provided with an allocation valve 332 so that it can be allocated to either the first hydraulic consumer circuit 20a (HC1) or the second hydraulic consumer circuit 20b (HC2).

For example, if there is a demand for fifteen PCUs to be allocated to the first hydraulic consumer circuit 20a, the allocation valves 332 for the first and fourth pump modules allocate their respective services to the first hydraulic consumer circuit 20a, while the allocation valves 332 for the second and third pump modules allocate their respective services to the second hydraulic consumer circuit 20b.

The skilled reader will appreciate that any multiple of three PCUs can be allocated using this principle. In contrast, by way of example, if all of the pump modules 12 had an equal number of PCUs then eight pump modules 12 and eight allocation valves 332 would be required to achieve the same functionality using three-way valves.

Whilst the embodiments described above focus primarily on operating modes for the system 10 in which the pump modules 12 act to pump fluid to the consumer circuits 20a, 20b, it is noted that in some embodiments the system 10 is also configured to operate in a motoring mode at certain times, in which the direction of fluid flow reverses such that fluid flows from the hydraulic consumer circuits 20a, 20b, through the valve arrangement 28, 128, 228, 328 and to the pump modules 12, to drive movement of the PCUs. Such embodiments may rely on the use of controllable check valves in the allocation valves, to allow flow into the output ports 36 of the allocation valves when motoring is required. Such check valves may still be integrated with the allocation valves, or alternatively separate check valves may be preferred in such embodiments. Controllable check valves suitable for this purpose include solenoid-operated single blocking valves, namely two-way, two-position, solenoid-operated valves having a straight through connection in one position and a check valve in the other position, the normal position being the checking position.

Alternatively, different allocation valves may be used that are configured for closed transitions, enabling the check valves to be dispensed with as there is no risk of leakage between ports during transitions. In this case, pressure relief valves will typically be required in the lines between the input ports 34 of the allocation valves and the pump modules 12, to prevent deadheading during valve transitions.

It is noted that the system 10 may be configured such that only part of the system 10 can operate in a motoring mode. For example, in an arrangement having two allocation valves 32 and four pump modules 12, one of the allocation valves 32 and its connected pump modules 12 may be configured to allow motoring while the other allocation valve 32 is not.

The skilled reader will appreciate that there are various scenarios in which a motor mode may be useful, particularly including operations that may generally be referred to as 'energy recovery' or 'regeneration' operations. Such operations are applicable to linear actuators, for example in the case of allowing a loaded ram to drop, where the reducing gravitational potential energy is used to produce high pressure fluid. Recovery or regen operations may also involve rotary actuators, for example by operating a hydraulic motor as a pump. For example, when braking a hydraulic motor that is connected to a driving wheel in a vehicle, reducing kinetic energy of a travelling vehicle can be used to produce high pressure fluid from the hydraulic motor. Similarly, when braking a hydraulic motor that is connected to a swing action in an excavator, high pressure fluid can be produced using the kinetic energy of the swinging cab.

It will be appreciated by a person skilled in the art that the invention could be modified to take many alternative forms to that described herein, without departing from the scope of the appended claims.

For example, the valve seat of the check valve may be inclined relative to the valve axis at a different angle to the embodiments described above, and may extend orthogonally to the valve axis such that the valve seat is generally planar.

For example, in principle the check valves need not be integrated with the allocation valves and can be provided separately as is conventional, whilst retaining the same dynamic reallocation functionality in the valve arrangement. It is also possible for one output port of an allocation valve or spool valve assembly to be furnished with an integrated check valve while another output port of the same spool valve assembly does not include an integrated check valve.

In some embodiments, the hydraulic system may have multiple allocation valves and more than two hydraulic consumer circuits, in which case the two output ports of each allocation valve are connected to a respective pair of the hydraulic circuits, so that each hydraulic circuit is connected to at least one of the allocation valves. For example, in a system having three hydraulic consumer circuits and three allocation valves, a first allocation valve may be connected to a first consumer circuit and a second consumer circuit, a second allocation valve may be connected to the first consumer circuit and a third consumer circuit, and a third allocation valve may be connected to the second and third consumer circuits. This demonstrates the range of system topologies that are made possible due to the flexibility of the allocation valves.

## Claims

1. A hydraulic system (10), the system (10) comprising:
multiple pump modules (12);
multiple hydraulic consumers (22); and
a valve arrangement (28, 128, 228) comprising one or more allocation valves (32), the or each allocation valve (32) having four ports (34, 36) that are respectively fluidly connected to a respective pair of the pump modules (12) and to two of the hydraulic consumers (22), wherein the or each allocation valve (32) is operable to connect each of its respective connected pump modules (12) to a respective one of the connected hydraulic consumers (22), or to connect both of its respective connected pump modules (12) to either one of the connected hydraulic consumers (22).

2. The system (10) of claim 1, wherein the or each allocation valve (32) is embodied as a spool valve that comprises:
a first pump port (34a) that is fluidly connected to a first pump module (12) of the respective pair of pump modules (12);
a second pump port (34b) that is fluidly connected to a second pump module (12) of the respective pair of pump modules (12);
a first consumer port (36a) that is fluidly connected to a hydraulic consumer (22) of the system (10);
a second consumer port (36b) that is fluidly connected to another hydraulic consumer (22) of the system (10);
a valve chamber (42); and
a spool (46) configured for translating movement along a valve axis (44) within the valve chamber (42) between multiple operating positions, to control fluid flow through the valve chamber (42) between the ports (34, 36), the operating positions comprising:
a first operating position, in which the first pump port (34a), the second pump port (34b) and the first consumer port (36a) are fluidly connected to each other and fluidly isolated from the second consumer port (36b);
a second operating position, in which the first pump port (34a), the second pump port (34a) and the second consumer port (36b) are fluidly connected to each other and fluidly isolated from the first consumer port (36a); and
a third operating position, in which the first pump port (34a) is fluidly connected to the first consumer port (36a), the second pump port (34b) is fluidly connected to the second consumer port (36b), and the first pump port (34a) is fluidly isolated from the second pump port (36b).

3. The system (10) of claim 1 or claim 2, wherein the valve arrangement (28, 128, 228) comprises multiple allocation valves (32) that are each fluidly connected to a respective pair of pump modules (12) of the system (10) and to two of the hydraulic consumers (22) of the system (10).

4. The system (10) of claim 3, wherein two allocation valves (32) are connected to the same two hydraulic consumers (22).

5. The system (10) of claim 3 or claim 4, wherein one allocation valve (32) is connected to a hydraulic consumer (22) that another allocation valve (32) is not connected to.

6. The system (10) of any of claims 3 to 5, comprising at least one manifold (26a, 26b) through which multiple allocation valves (32) connect to a respective hydraulic consumer (22), and wherein, optionally, the valve arrangement (28, 128, 228) comprises a respective output (30a, 30b) connected to the or each manifold (26a, 26b).

7. The system (10) of any of claims 3 to 6, wherein two of the allocation valves (32) are configured to operate in unison in response to a common signal.

8. The system (10) of any preceding claim, wherein the valve arrangement (28, 128, 228) is embodied as a valve block.

9. The system (10) of claim 8, wherein the valve arrangement (28, 128, 228) comprises two or more allocation valves (32), and the valve block includes at least two shared galleries with which respective ports (36) of a number of allocation valves (32) are in fluid communication, in use.

10. The system (10) of any preceding claim, configured to operate in a motoring mode in which fluid flows from at least one of the hydraulic consumers (22) to at least one of the pump modules (12), through the valve arrangement (28, 128, 228).

11. The system (10) of any preceding claim, wherein the valve arrangement (28, 128, 228) comprises a respective check valve (38) disposed on each line between at least one of the one or more allocation valves (32) and the respective connected hydraulic consumers (22).

12. A control system (14) configured to operate the hydraulic system (10) of any preceding claim.

13. The control system (14) of claim 12, configured to operate each pump module (12) to reduce, and optionally cease, pumping during movement of a spool (46) of the allocation valve (32) to which the pump module (12) is connected.

14. The control system (14) of claim 13, configured to detect the position of the spool (46).

15. The hydraulic system (10) of any of claims 1 to 11, comprising the control system (14) of any of claims 12 to 14.
